# EUROPEAN PATENT APPLICATION

(11) **EP 2 523 492 A1**
(43) Date of publication of application: **14.11.2012**
(21) Application number: 11290225.9
(22) Date of filing: 12.05.2011
(51) Int. Cl.: H04W 24/02

(54) **Method for managing a femto-cell equipment**

(71) Applicant: Alcatel Lucent, 75007 Paris (FR)
(72) Inventor: Vidalenc, Bruno, 93620 Nozay (FR); Ciavaglia, Laurent, 93620 Nozay (FR)
(74) Representative: Croonenbroek, Thomas Jakob

(57) **Abstract**

The embodiments of the present invention refer to a method for managing a private femto-cell equipment connected to a mobile network wherein at least one mobile device also connected to the mobile network is a registered mobile device of the femto-cell and wherein the method comprises the following steps:
- determining a coverage area of the femto-cell,
- defining an activation area according to the coverage area,
- detecting the location of at least one registered mobile device,
if at least one registered mobile device is detected by the mobile network within the activation area,
- activating the femto-cell equipment,
otherwise,
- deactivating the femto-cell equipment.

## Description

### BACKGROUND ART

The embodiments of the present invention relate to the field of mobile networks and in particular of femto-cells management in mobile networks.

Femto-cells refer to small size cells wherein connections to the mobile network are provided by equipment generally located in private areas and installed by the users.

Thus, femto-cell equipments allow domestic connections which enhance the mobile network capacity and reduce the risk of congestion.

In general, the connection through the femto-cell equipments is restricted to authorized users, for example the femto-cell equipment owner, and handover from a macro-cell to the femto-cell is automatically achieved when an authorized user enters the coverage area of the femto-cell.

However, in the case of a private femto-cell equipment, for example located at home, the power consumption may not be negligible as the femto-cell equipment scrutinizes permanently for the presence of an authorized user whereas the authorized users may be outside of the coverage area for a long time, for example all day long if authorized users are at work in the case of a domestic femto-cell.

As a consequence, a significant amount of power is wasted for the activation of the femto-cell equipment when authorized users are away from the coverage area of the femto-cell.

### SUMMARY

Some embodiments of the present invention aim at overcoming at least some of the aforementioned drawbacks of the state of the art.

This may be achieved by a method for managing a private femto-cell equipment connected to a mobile network wherein at least one mobile device also connected to the mobile network is a registered mobile device of the femto-cell and wherein the method comprises the following steps:
- determining a coverage area of the femto-cell,
- defining an activation area according to the coverage area,
- detecting the location of at least one registered mobile device,
   if at least one registered mobile device is detected by the mobile network within the activation area,
- activating the femto-cell equipment,
   otherwise,
- deactivating the femto-cell equipment.

According to another aspect of the present invention, the activation area corresponds to the coverage area of the at least one macro-cell of the mobile network located next to the femto-cell.

According to a further aspect of the present invention, the activation area corresponds to the coverage area of the femto-cell.

According to an additional aspect of the present invention, the step of determining a coverage area of the femto-cell is achieved using the location of the femto-cell equipment and the theoretical femto-cell equipment coverage capability.

According to another aspect of the present invention, the step of detecting the location of the at least one registered mobile device is achieved by using a triangulation method with the antennas of the mobile network.

According to a further aspect of the present invention, the step of detecting the location of at least one registered mobile device is achieved by using a Global Positioning System "GPS" module implemented inside the mobile device.

According to an additional aspect of the present invention, the step of detecting the location of at least one registered mobile device is achieved by using the signal strength between the mobile device and the antennas of the mobile network.

According to another aspect of the present invention, the detected location of at least one registered mobile device is transmitted and processed in a mobile network localization-based service server.

According to a further aspect of the present invention, in case of detection of the presence of at least one registered mobile device in the activation area, the mobile network localization-based service server sends an activation signal to the femto-cell equipment.

According to an additional aspect of the present invention, when at least one registered mobile device detects that its location is within the activation area, a triggering signal is sent to the mobile network in order to trigger the sending of an activation signal toward the femto-cell equipment.

According to another aspect of the present invention, the activation signal is transmitted to the femto-cell equipment according to a TR-069 protocol.

The embodiments of the present invention also refer to a femto-cell equipment comprising:
- communication means for communicating with a mobile core network (5);
- activation/deactivation means configured to activate/deactivate said femto-cell equipment according to activation/deactivation signals sent by said mobile core network (5) through said communication means.

According to another aspect of the present invention, the activation/deactivation signal sent by the mobile core network is established according to a TR-069 protocol.

### BRIEF DESCRIPTION OF THE DRAWINGS

Some embodiments of apparatus and equipment in accordance with embodiments of the present invention are now described, by way of example only, and with reference to the accompanying drawings, in which:
FIG.1 is a flowchart representing the different steps of the method according to an embodiment of the present invention;
FIG.2 is a diagram of a mobile device location determination based on a triangulation technique;
FIG.3 is a diagram of an example of configuration with a home femto-cell and an authorized user;
FIG.4 is a diagram of an example of configuration with a home femto-cell and an authorized user located within the femto-cell activation area;

### DETAILED DESCRIPTION

As used herein, the term "TR-069" corresponds to the acronym Technical Report 069 and defines an application layer protocol for remote management of end-user devices. The said technical report is managed by the Broadband Forum;
As used herein, the term "GPS" refers to the acronym Global Positioning System;
As used herein, the term "GSM" refers to the acronym Global System for Mobile;

As used herein, the terms "3G" and "4G" refer to third generation and fourth generation mobile telecommunications and correspond to a generation of standards for mobile phones.

The following described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments refer to the management of the activation (and deactivation) of a private femto-cell equipment 7 connected to a mobile network based, for example, on a GSM, a 3G or a 4G technology. In general, the number of authorized users of a private femto-cell is limited, for example to the members of a family, so that the amount of time during which all the authorized users are away from the femto-cell coverage area 8 may not be negligible.

Thus, according to the embodiments of the present invention, authorized users are located by their mobile device 1 through the mobile network and the femto-cell equipment 7 is activated or deactivated by the mobile network according to the location of the authorized users of said femto-cell.

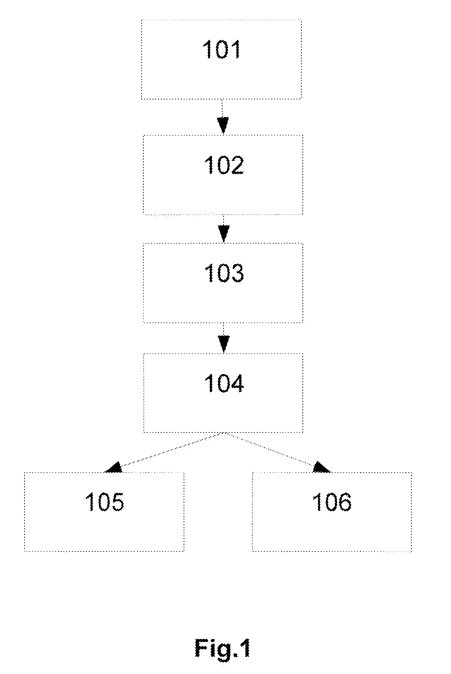

The different steps of the method will now be described based on the flowchart given in figure 1.

The first step 101 refers to the connection of a femto-cell equipment 7 to a mobile network. Said connection is generally achieved by the user. Thus, said connection allows the femto-cell equipment 7 to communicate with the core network 5 of the mobile network. Furthermore, said first step allows the mobile network to determine the location of the femto-cell equipment 7.
The determination of the location of the femto-cell equipment 7 may be achieved by different way.

According to a first embodiment, the location may be determined based on the address given by the user at the purchase of the femto-cell equipment 7. A GPS coordinate can be deduced from said address and the GPS coordinate may be registered in a database of the mobile network.

According to another embodiment, the location of the femto-cell equipment may be determined automatically, either by a GPS module located in the femto-cell equipment 7 or by the determination of the location of the line to which the femto-cell equipment is connected.

Besides, at the first step 101, the coverage area 8 of the femto-cell may also be determined.

According to a first embodiment, such determination is achieved based on the theoretical coverage area of the femto-cell equipment 7 given in the specifications of said femto-cell equipment 7. Indeed, knowing the location of the femto-cell equipment 7 and its theoretical coverage radius, the mobile network can deduce the coverage area 8 of the femto-cell.

In another embodiment, the mobile network determines the coverage area 8 by detecting the location of the mobile device 1 of an authorized user when said authorized user is connected to the femto-cell equipment 7 (means to determine the location of the mobile device 1 will be described in the following of the description).
Thus, the first step 101 allows also determining the coverage area 8 of the femto-cell.

The second step 102 refers to the definition of an activation area 11 wherein the activation or the deactivation of the femto-cell equipment 7 is triggered according to the detection of authorized users of the femto-cell within said activation area 11. In practice, this activation area 11 is approximately the same as the coverage area 8 as the goal is to activate the femto-cell equipment 7 when an authorized user enters said coverage area 8 and to deactivate the femto-cell equipment 7 when no authorized user remains within the coverage area 8. However, depending on the method used to detect the location of the user, the size of the activation area 11 may vary and be larger than the coverage area 8 of the femto-cell, for example twice or less than twice the size of the coverage area 8 or may correspond to the size of the macro-cell located next to the femto-cell or covering the femto-cell.

In practice, the localization of the user is generally accurate with an uncertainty of a few meters so that the activation area 11 will be determined as being the same or a few meters larger than the coverage area 8 of the femto-cell.

The third step 103 refers to the determination of the location of at least one authorized user which is actually the location of the mobile device 1 of the said at least one authorized user.
Several embodiments are also possible for this determination.

According to a first embodiment, the determination of the location of a mobile device 1 is achieved based on a triangulation technique using the GSM signals exchanged between the mobile device 1 and the antennas 3 of the mobile network.

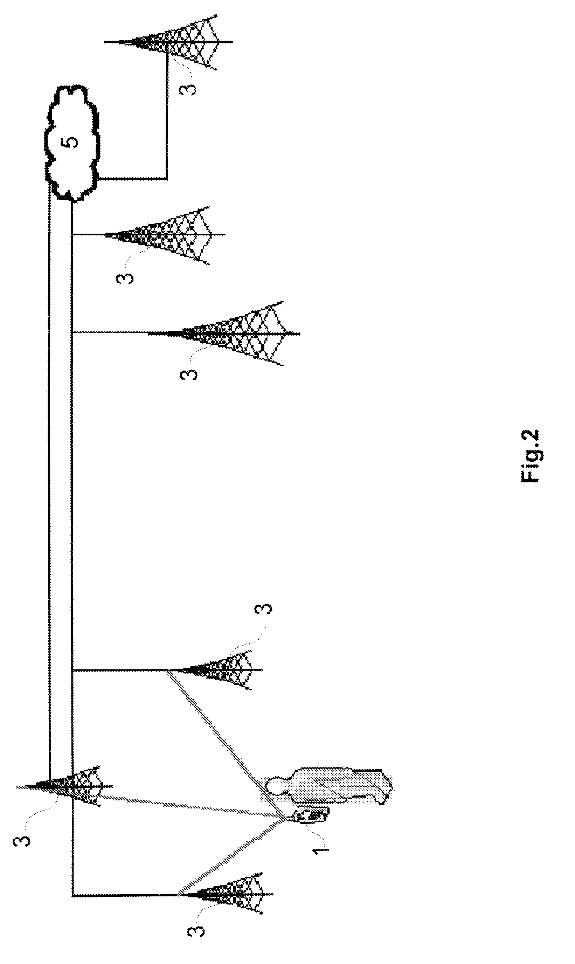

Figure 2 shows an example of configuration of network wherein signals, for example roaming signals, emitted by a mobile device 1 are detected by three different antennas 3 corresponding to macro-cell equipments or macro-cell base stations. The location of the mobile device 1 is then determined based on a combination of the signal strength received by the three different antennas 3. As the precise position of the antennas 3 is known, the location of the mobile device 1 can be deduced by the mobile network.

According to another embodiment, the location of a mobile device 1 is achieved using a GPS module implemented in the mobile device 1.

The fourth step 104 refers to the comparison between the location of the mobile device 1 of at least one authorized user and the location of the activation area 11.

If the determined location of a mobile device 1 of at least one of the authorized users is within the activation area 11, the method goes to step 105 and if the determined locations of the mobile devices 1 of all the authorized users are outside the activation area 11, the method goes to step 106.

The fifth step 105 refers to the activation of the femto-cell equipment 7 (if said femto-cell equipment 7 is not already activated). This activation is triggered by an activation signal sent by a Location-Based Service (LBS) of the mobile network. Said LBS may be located in a server 13, said LBS server 13 receives, from the mobile network, the location information of the different mobile devices 1 of the mobile network and detects the presence of an authorized user in the activation area 11 of the femto-cell and sends an activation signal toward the femto-cell equipment 7 to activate said femto-cell equipment 7. The activation signal is, for example, established based on a TR-069 protocol and is a proprietary message. It has to be noted that the LBS server 13 can also be located within the mobile network.

Alternatively, if the mobile device 1 comprises a GPS module, the activation can be triggered by an application installed on the mobile device 1, said application sending a dedicated signal to the mobile network when the mobile device 1 gets close to the coverage area 8 of the femto-cell, said dedicated signal triggering the sending of an activation signal from the mobile network to the femto-cell equipment 7.

The sixth step 106 refers to the deactivation of the femto-cell equipment 7 (if said femto-cell equipment 7 is not already deactivated). In the same way as for the activation, the LBS server 13 detects that no authorized mobile device 1 lies in the activation area 11 and triggers the sending of a deactivation signal toward the femto-cell equipment 7 to deactivate said femto-cell equipment 7.

Alternatively, if the mobile device 1 comprises a GPS module, the deactivation can be triggered by an application installed on the mobile device 1 when the authorized users with their mobile devices 1 leave the coverage area 8 of the femto-cell.

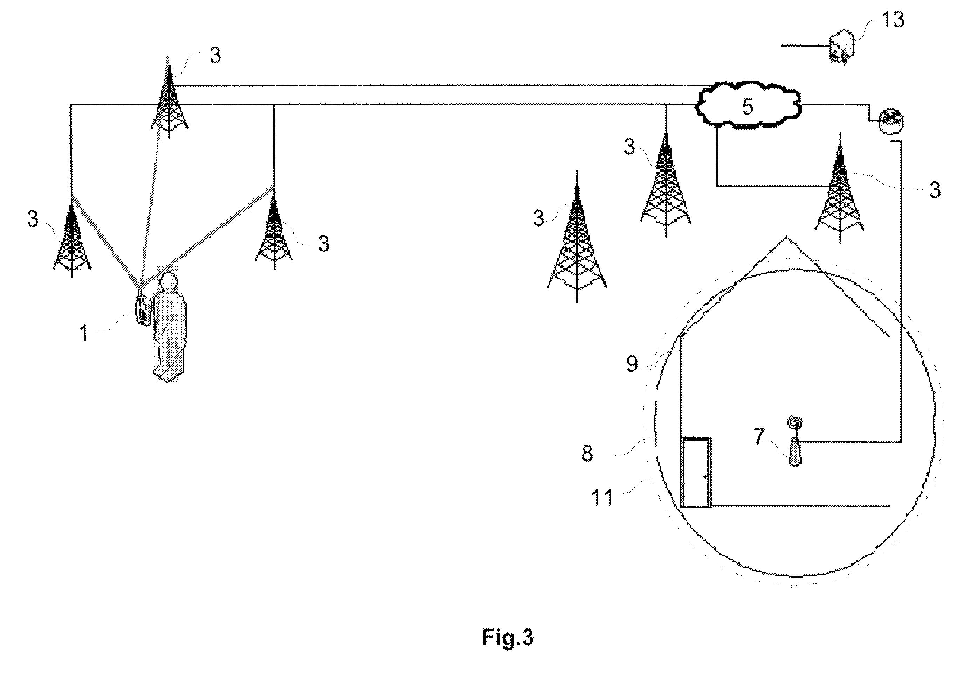

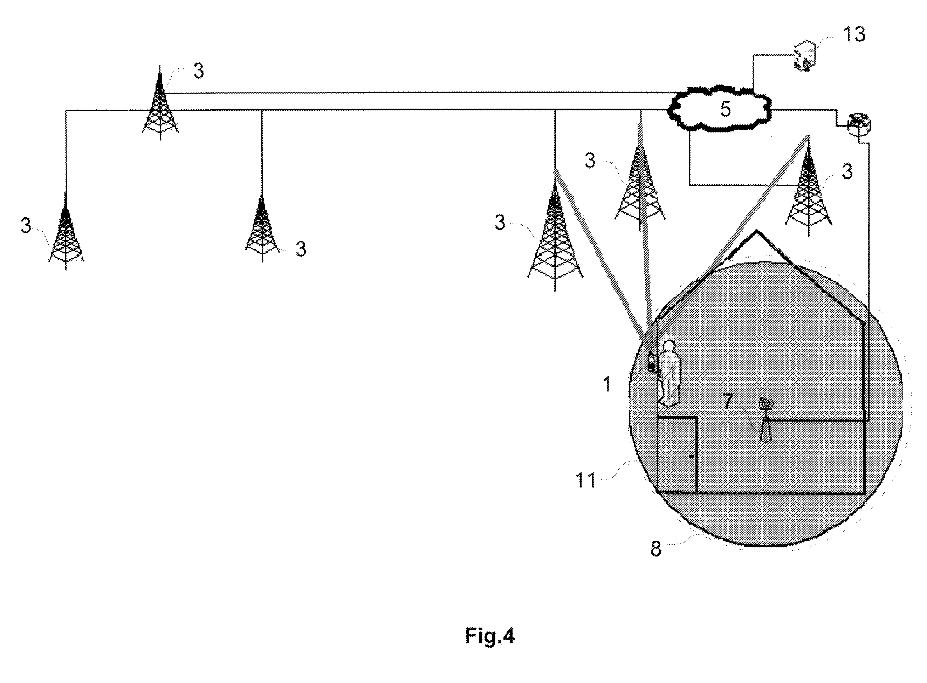

To better understand the different aspects of the method presented previously, an example based on the configuration defined in figures 3 and 4 will now be described.

The user has a mobile device 1 and has installed a private femto-cell equipment 7 at home 9 and is the only authorized user. In the situation presented in figure 3, the user (and his mobile device 1) is outside of the range of the activation area 11 of its femto-cell and is, for example, at work.

As described previously, the mobile device 1 is located by the mobile network based on the signals received by the antennas 3 located in the neighbourhood of the mobile device 1 at that time. As the mobile device 1 is located outside of the activation area 11, the femto-cell equipment 7 is deactivated. After his workday, the user goes back home with its mobile device 1. During his way back home, his mobile device 1 is connected successively to the antennas or base stations 3 located along his path so that the mobile device 1 location may be tracked by the mobile network and notably by the Location-Based Service (LBS) server 13.

Thus, when the detected position of the mobile device 1 is within the activation area 11, the LBS server 13 sends an activation signal to the femto-cell equipment 7 to trigger the activation of said femto-cell equipment 7. This activation message may be a TR-069 message that produces the activation of the femto-cell equipment 7. As the activation area 11 corresponds to or is slightly larger than the coverage area 8, when the user enters the coverage area 8 as described in figure 4, the femto-cell equipment 7 is activated and the mobile device 1 is automatically attached to the said femto-cell equipment 7 through a handover process. Alternatively, the handover to the femto-cell may not be automatic so that the user may decide if he wants or not his mobile device 1 to be attached to the femto-cell, in this case, a signal is emitted by the mobile device 1 to inform the user of the possibility to be attached to the femto-cell.

As long as the mobile device 1 is attached to the femto-cell, the mobile network knows that the mobile device 1 is within the coverage area 8 so that the femto-cell equipment 7 stays activated.

At night, the user may switch off his mobile device 1. When the mobile device 1 is switched off, the mobile network does not detect the location of the mobile device 1 anymore so that a deactivation signal is sent to the femto-cell equipment 7. Besides, a delay may be defined between the detection of the mobile device 1 away from the activation area 11 or the non-detection of the mobile device 1 location and the deactivation of the femto-cell equipment in order to avoid unwilling deactivation due to short time loss of signal for example.

Thus, the femto-cell equipment 7 is deactivated during the night while the user is sleeping and has switched off his mobile device 1 (obviously, if the user lets his mobile device 1 switched on during the night, the femto-cell equipment 7 remains activated).

In the morning, the user switches his mobile device 1 on. Attachment is first achieved to a macro-cell of the mobile network. Thanks to this attachment, the mobile network and in particular the LBS server 13 detect the location of the mobile device 1 and determine that said mobile device 1 is within the activation area 11 so that an activation signal is sent to the femto-cell equipment 7. The femto-cell equipment 7 is then activated and the mobile device 1 is connected to the femto-cell equipment 7 through a handover process.

Later on, the user leaves his home with his mobile device 1, for example to go to work. When, the user leaves the coverage area 8 of the femto-cell, a connection is established with a macro-cell through a handover and when the user leaves the activation area 11 of the femto-cell, a deactivation message is sent to the femto-cell equipment 7 to trigger the deactivation of said femto-cell equipment 7. A deactivation area different from the activation area 11 may also be defined, for example the activation area 11 may be larger than the coverage area 8 whereas the deactivation area may correspond to the coverage area 8. The femto-cell equipment 7 remains then deactivated until the mobile device 1 of the authorized user comes back within the activation area 11, for example in the evening after his workday.

Thus, the embodiments of the present invention allow to trigger the activation and the deactivation of the femto-cell equipment 7 according to the location of the authorized mobile devices 1 leading thus to an energy saving without adding any constraints for the users. Furthermore, the deactivation of the femto-cell equipment 7 when the authorizer users are away from said femto-cell allows to reduce the risk of hacking or malicious connection to the femto-cell equipment 7.

## Claims

1. Method for managing a private femto-cell equipment (7) connected to a mobile network wherein at least one mobile device (1) also connected to the mobile network is a registered mobile device (1) of the femto-cell and wherein the method comprises the following steps:
- determining a coverage area (8) of the femto-cell,
- defining an activation area (11) according to the coverage area (8),
- detecting the location of at least one registered mobile device (1),
if at least one registered mobile device (1) is detected by the mobile network within the activation area (11),
- activating the femto-cell equipment (7),
otherwise,
- deactivating the femto-cell equipment (7).

2. Method for managing a private femto-cell equipment (7) in accordance with claim 1 wherein the activation area (11) corresponds to the coverage area of the at least one macro-cell of the mobile network located next to the femto-cell.

3. Method for managing a private femto-cell equipment (7) in accordance with claim 1 wherein the activation area (11) corresponds to the coverage area (8) of the femto-cell.

4. Method for managing a private femto-cell equipment (7) in accordance with one of the previous claims wherein the step of determining a coverage area (8) of the femto-cell is achieved using the location of the femto-cell equipment (7) and the theoretical femto-cell equipment (7) coverage capability.

5. Method for managing a private femto-cell equipment (7) in accordance with one of the previous claims wherein the step of detecting the location of the at least one registered mobile device (1) is achieved by using a triangulation method with the antennas (3) of the mobile network.

6. Method for managing a private femto-cell equipment (7) in accordance with one of the claims from 1 to 5 wherein the step of detecting the location of at least one registered mobile device (1) is achieved by using a Global Positioning System "GPS" module implemented inside the mobile device (1).

7. Method for managing a private femto-cell equipment (7) in accordance with one of the claims from 1 to 5 wherein the step of detecting the location of at least one registered mobile device (1) is achieved by using the signal strength between the mobile device (1) and the antennas (3) of the mobile network.

8. Method for managing a private femto-cell equipment (7) in accordance with one of the previous claims wherein the detected location of at least one registered mobile device (1) is transmitted and processed in a mobile network localization based service server (13).

9. Method for managing a private femto-cell equipment in accordance with claim 8 wherein, in case of detection of the presence of at least one registered mobile device (1) in the activation area (11), the mobile network localization based service server (13) sends an activation signal to the femto-cell equipment (7).

10. Method for managing a private femto-cell equipment in accordance with claim 6 wherein, when at least one registered mobile device (1) detects that its location is within the activation area (11), a triggering signal is sent to the mobile network in order to trigger the sending of an activation signal toward the femto-cell equipment (7).

11. Method for managing a private femto-cell equipment (7) in accordance with claim 9 or 10 wherein the activation signal is transmitted to the femto-cell equipment (7) according to a TR-069 protocol.

12. Femto-cell equipment (7) comprising:
- communication means for communicating with a mobile core network (5);
- activation/deactivation means configured to activate/deactivate said femto-cell equipment according to activation/deactivation signals sent by said mobile core network (5) through said communication means.

13. Femto-cell equipment (7) in accordance with claim 12 wherein the activation/deactivation signal sent by the mobile core network (5) is established according to a TR-069 protocol.
